Europäisches Patentamt

European Patent Office

Office européen des brevets

(11) Numéro de publication: **0 007 868**
**A1**

## (12) DEMANDE DE BREVET EUROPEEN

(21) Numéro de dépôt: 79400523.1

(22) Date de dépôt: 20.07.79

(51) Int. Cl.³: **H 02 H 3/32**
**H 01 H 59/00, H 02 H 3/10**

(30) Priorité: 25.07.78 FR 7822016

(43) Date de publication de la demande:
06.02.80 Bulletin 80/3

(84) Etats Contractants Désignés:
AT BE CH DE FR GB IT LU NL SE

(71) Demandeur: Lewiner, Jacques
5, rue Bory d'Arnex
F-92210 Saint-Cloud(FR)

(71) Demandeur: Dreyfus, Gérard
Rue du Viaduc
Villebon S/Yvette F-91120 Palaiseau(FR)

(71) Demandeur: Perino, Didier
10, rue de Bellevue
F-92150 Suresnes(FR)

(72) Inventeur: Lewiner, Jacques
5, rue Bory d'Arnex
F-92210 Saint-Cloud(FR)

(72) Inventeur: Dreyfus, Gérard
Rue du Viaduc
Villebon S/Yvette F-91120 Palaiseau(FR)

(72) Inventeur: Perino, Didier
10, rue de Bellevue
F-92150 Suresnes(FR)

(74) Mandataire: Behaghel, Pierre et al,
CABINET PLASSERAUD 84 rue d'Amsterdam
F-75009 Paris(FR)

(54) Perfectionnements aux dispositifs propres à détecter des variations de flux magnétique, notamment aux disjoncteurs.

(57) Dispositif pour détecter les dépassements d'un seuil par les variations d'un flux magnétique.

La tension V induite par ces variations dans un enroulement est redressée en 20 et la tension redressée obtenue est appliquée aux bornes d'un condensateur 16, 17 dont une électrode est mobile par rapport à l'autre et qui contient un électret 18 propre à engendrer une force électrostatique H tendant à rapprocher ces deux électrodes à l'encontre de l'attraction magnétique d'un aimant 21, les basculements de l'électrode mobile dûs au dépassement du seuil ayant pour effet d'actionner un interrupteur électrique 22.

Application entre autres : disjoncteurs.

FIG.2.

EP 0 007 868 A1

1

Perfectionnements aux dispositifs propres à
détecter des variations de flux magnétique,
notamment aux disjoncteurs.


L'invention est relative aux dispositifs propres à détecter des variations de flux magnétique de façon telle que le dépassement d'un seuil donné par l'amplitude d'une telle variation par unité de temps se traduise par le déplacement d'un élément propre à déclencher une action telle qu'une signalisation, une alarme ou une manoeuvre de sécurité, cet élément étant notamment le contact mobile d'un interrupteur électrique.

Elle concerne plus particulièrement, parmi ces dispositifs, ceux qui comprennent un circuit électrique quasiment fermé influençable par la variation de flux à détecter et propre à transformer celle-ci en une force électromotrice induite.

Si la variation de flux considérée est produite par un phénomène unique et non répétitif, tel que par exemple la translation d'un aimant ou que la variation brusque d'un courant continu, la valeur de la force électromotrice induite est directement proportionnelle à l'amplitude du phénomène à détecter.

Mais si le phénomène à détecter est un courant alternatif de fréquence f, et qu'alors le flux considéré est un flux sinusoïdal de la forme $\Phi = \Phi_0 \sin 2 \pi ft$ engendré selon l'axe d'un enroulement par circulation dudit courant alternatif dans cet enroulement, la force électromotrice d'induction qu'engendre, aux bornes d'un autre enroulement traversé par le même flux, la variation de ce flux dans le temps, est de la forme $d\Phi/dt = 2\pi f \Phi_0 \cos 2\pi ft$ : la valeur moyenne de cette force électromotrice est nulle, mais non celle de la tension redressée correspondante, laquelle valeur est proportionnelle au produit $2\pi f \Phi_0$.

C'est une telle valeur qui est exploitée selon l'invention, mais en général, le redressement en cause n'est utile que pour donner un certain sens au signal élaboré, car ce signal est élaboré dès la première alternance du

2

phénomène alternatif à déceler, cette première alternance
mettant en jeu par elle-même une variation de flux suffisamment rapide et intense pour la détection.

Parmi les dispositifs du genre en question, l'invention concerne entre autres les disjoncteurs ou appareils de
sécurité montés sur l'alimentation d'un circuit électrique
et destinés à couper automatiquement ou "disjoncter" cette
alimentation dès l'apparition d'un courant de fuite et/ou
d'une surintensité en un point quelconque dudit circuit.

Elle vise notamment, parmi ces disjoncteurs, ceux
comprenant un transformateur monté sur les fils d'alimentation du circuit à protéger, transformateur agencé de façon à
engendrer automatiquement dans un autre fil une tension varaible V lorsqu'un déséquilibre de courant se manifeste dans
les premiers fils et des moyens pour exploiter ladite tension
V de façon à couper automatiquement l'un au moins desdits premiers fils dès que l'amplitude de ladite tension dépasse un
seuil prédéterminé.

De tels disjoncteurs sont particulièrement intéressants pour la détection d'un courant de fuite correspondant
à une portion d'un courant d'alimentation, portion qui, parvenue de la source au niveau du récepteur en empruntant l'un
des deux fils d'un cordon d'alimentation, retourne vers la
masse et non vers le second fil dudit cordon à travers un
corps humain mis involontairement en contact avec une portion conductrice dénudée du circuit considéré, ce qui crée
un risque d'électrocution particulièrement grave en ambiance
humide.

L'invention a pour but, surtout, de rendre les dispositifs du genre en question tels qu'ils répondent mieux que
jusqu'à ce jour aux diverses exigences de la pratique, notamment en ce que leur fonctionnement soit sûr et autonome,
c'est-à-dire ne nécessite aucune source d'énergie extérieure
pour leur fonctionnement et ne consomme aucun courant électrique à l'état de veille, et en ce qu'ils sont faciles à
réarmer après usage.

Les dispositifs de détection du genre en question
selon l'invention sont du type comprenant un circuit électrique quasiment fermé, tel qu'un enroulement, agencé et monté de façon telle que les variations du flux magnétique à détecter engendrent par induction aux bornes de cet enroulement une tension électrique V, et ils sont caractérisés en ce qu'ils comprennent en outre deux électrodes formant condensateur, dont l'une est mobile par rapport à l'autre, un électret, interposé entre ces deux électrodes, dont la charge produit un champ exerçant sur ces électrodes une force électrostatique H tendant à les rapprocher mutuellement, des moyens pour élaborer à partir de la tension V ci-dessus une tension redressée U et pour l'appliquer entre les deux électrodes dans un sens tel que le champ qui en résulte s'oppose à celui engendré par l'électret et tende donc à réduire la force H, et des moyens sollicitant de manière "peu réversible" l'électrode mobile dans le sens opposé à la force H, la force de sollicitation de ces moyens et la charge de l'électret étant choisies de façon telle que les dépassements par la tension U d'un seuil $U_o$ prédéterminé correspondant au niveau à détecter du phénomène générateur du flux magnétique provoquent les basculements de l'électrode mobile de sa position de veille à sa position active, le déclenchement de l'action désirée étant asservi auxdits basculements.

Dans des modes de réalisation préférés, on a recours en outre à l'une et/ou à l'autre des dispositions suivantes :
- les moyens de sollicitation à effet peu réversible sont de type magnétique et constitués de préférence par un aimant permanent fixe et par une pièce en matière magnétique liée à l'électrode mobile,
- les moyens de sollicitation à effet peu réversible sont constitués par un mécanisme élastique à dépassement de point mort,
- un organe manuel de réarmement est prévu pour replacer l'électrode mobile en sa position de repos initiale après ses basculements,
- le dispositif détecteur comprend, monté sur l'un des conducteurs reliant la sortie des moyens redresseurs au condensateur, un limiteur de tension propre à couper ce conducteur lorsque la tension U demeure en-deçà du seuil $U_o$ et une ré-

4

sistance élevée branchée entre les deux électrodes du condensateur,

- le dispositif détecteur est un disjoncteur sensible aux déséquilibres d'une alimentation électrique effectuée à travers des premiers fils, et il comprend un transformateur agencé de façon à engendrer automatiquement une tension sur un autre fil lors de l'a-parition d'un tel déséquilibre dans ladite alimentation, tension jouant le rôle de la tension V ci-dessus, et un interrupteur électrique monté sur l'un au moins desdits premiers fils et agencé de façon à être ouvert par les basculements susdits de l'électrode mobile,

- le disjoncteur selon l'alinéa précédent est sensible indifféremment à un courant de fuite propre à déséquilibrer une alimentation électrique effectuée à travers au moins deux fils, ou à une surintensité apparaissant sur l'un de ces fils, et il comprend à cet effet deux sous-ensembles amont à transformateur et redresseur sensibles chacun à l'un de ces défauts et choisis de façon à élaborer respectivement des signaux de commande de même ordre de grandeur, et un sous-ensemble aval commun comportant le condensateur à électret, les moyens de rappel peu réversibles et l'interrupteur,

- dans un disjoncteur selon l'un au moins des deux alinéas précédents, l'ensemble du transformateur, des moyens redresseurs de la tension V, des électrodes, de l'électret, des moyens de sollicitation à effet peu réversible et de l'interrupteur sont montés dans un même boîtier,

- le boîtier selon l'alinéa précédent est celui d'une prise de courant à au moins deux fiches mâles ou femelles,

- le boîtier selon l'alinéa qui précède le précédent est un raccord pour prise de courant comprenant au moins deux fiches mâles et au moins deux fiches femelles.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant aux dessins annexés d'une manière bien entendu non limitative.

- La figure 1 de ces dessins montre une application d'un disjoncteur selon l'invention,
- la figure 2 montre schématiquement un tel disjoncteur,
- la figure 3 est le schéma électrique d'une partie d'un autre tel disjoncteur,
- la figure 4 montre le schéma d'un perfectionnement de ces différents disjoncteurs,
- la figure 5 est un schéma du principe général de l'invention.

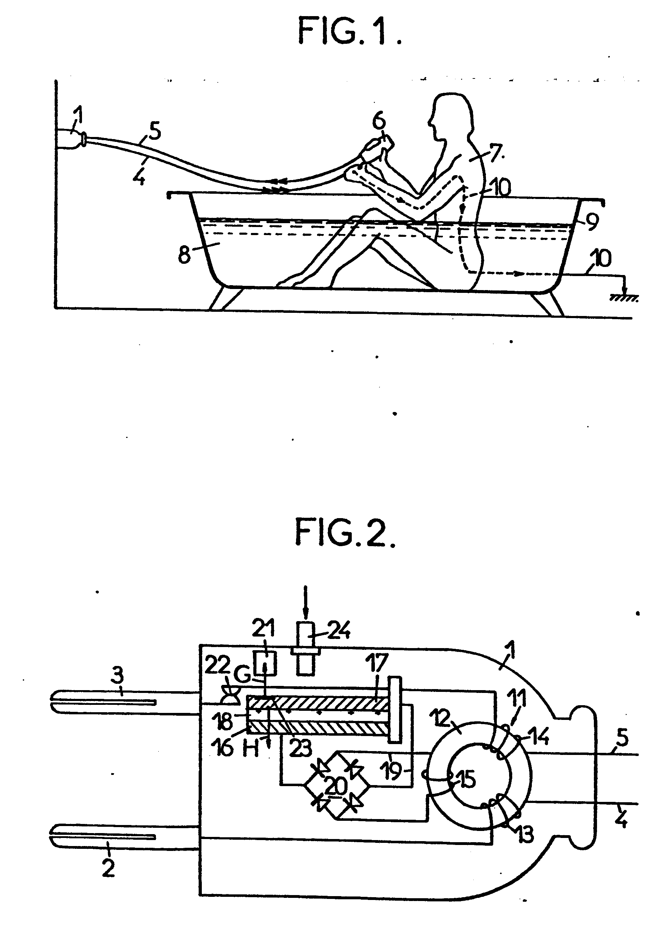

Le disjoncteur selon les figures 1 et 2 est contenu dans le boîtier 1 d'une prise de courant à deux broches mâles 2 et 3 reliées électriquement, par respectivement deux fils conducteurs 4 et 5, à un appareil électrique 6.

Cet appareil 6 est destiné à être utilisé dans une ambiance où existe un risque d'électrocution, notamment dans une salle d'eau, dans une cuisine, dans un atelier...

Il s'agit par exemple de l'un des appareils électriques suivants : sèche-cheveux, rasoir, brosse à dents, appareil de massage, fer à repasser, batteur, presse-agrumes, cafetière, perceuse...

On sait en particulier que si le corps humain présente à l'état sec une résistance électrique relativement élevée, de l'ordre de 100 kilohms, cette résistance est considérablement réduite quand il est mouillé, pouvant alors descendre à quelques centaines d'ohms seulement.

Si donc un individu en cet état mouillé vient en contact avec une plage conductrice dénudée d'un circuit électrique sous tension, la portion du courant parcourant ce circuit qui peut traverser son corps pour retourner à la masse peut être relativement intense et l'électrocuter dangereusement.

Sur la figure 1, on a désigné par la référence 7 le corps d'un tel individu partiellement immergé dans l'eau 8 d'une baignoire 9, et dont la main gauche vient en contact avec une plage dénudée de l'un des fils 4 et 5 : le trajet fléché 10 désigne le parcours du courant de fuite alors créé à travers le corps 7 et les tuyauteries de desserte de la baignoire 9 jusqu'à la terre, seule une portion du courant d'alimentation parvenu de la source jusqu'au niveau de l'utilisation par le fil 4 (phase) retournant à cette source par le fil 5 (neutre).

Le disjoncteur selon l'invention est agencé de façon à couper immédiatement l'un au moins des deux fils 4 et 5 au niveau de la prise 1 dès création d'un tel courant de fuite.

Il comprend :

- un transformateur différentiel 11 (figure 2), composé de trois enroulements montés sur un même noyau magnétique fermé 12, tel qu'un anneau en μ-métal, savoir deux enroulements identiques 13 et 14 constitués respectivement par des tronçons des deux fils 4 et 5, et un troisième enroulement 15,
- un condensateur composé d'une électrode fixe 16 et d'une électrode mobile 17, avec interposition d'un électret 18, c'est-à-dire d'une feuille diélectrique chargée électriquement, solidaire de l'électrode fixe 16, les charges de cet électret produisant un champ qui exerce sur l'électrode mobile 17 une force électrostatique d'attraction H tendant à la plaquer contre l'électret,
- un circuit électrique 19 à pont redresseur 20, propre à appliquer sur des électrodes 16 et 17 la tension U créée par redressement de la tension V éventuellement recueillie aux bornes de l'enroulement 15, et ce dans un sens tel que le champ qui en résulte s'oppose à celui créé par l'électret et tende donc à réduire la force H,
- un organe 21 propre à exercer sur l'électrode mobile, d'une manière "peu réversible" au sens indiqué ci-après, une autre force d'attraction G de sens opposé à la force H, c'est-à-dire tendant à séparer mutuellement les deux électrodes,
- et un interrupteur 22 interposé sur l'un au moins des deux fils 4 et 5 de façon telle qu'il soit fermé tant que l'électrode mobile est plaquée contre l'électrode fixe et au contraire ouvert pour l'autre position stable de cette électrode mobile, écartée de l'électrode fixe.

La charge de l'électret 18 et la force de l'organe 21 à effet peu réversible sont choisis de façon telle que les basculements de l'électrode mobile 17 de sa position de veille (représentée sur la figure 2) pour laquelle l'interrupteur 22 demeure fermé, à sa position active pour laquelle elle ouvre l'interrupteur 22 soient assurés dès que la valeur de la tension U dépasse un seuil $U_o$ prédéterminé.

La valeur de ce seuil $U_o$ est choisie de façon à correspondre à l'intensité maximum $I_o$ tolérable pour le courant de fuite défini ci-dessus.

Tant qu'il n'existe aucun courant de fuite dans le circuit à protéger, les intensités des courants d'aller et de retour qui circulent respectivement dans les deux enroulements 13 et 14 du transformateur différentiel 11 sont identiques et la tension différentielle V alors prélevée aux bornes de l'enroulement 15 est nulle.

La création d'un courant de fuite se traduit par un déséquilibre entre ces deux courants et donc par l'apparition d'un flux d'induction électromagnétique dans le noyau 12, laquelle engendre à son tour une tension induite V non nulle aux bornes de l'enroulement 15 ; c'est à la valeur $V_o$ de cette tension V correspondant à un courant de fuite ayant l'intensité maximum tolérable $I_o$ que correspond la valeur de seuil $U_o$ ci-dessus mentionnée pour la tension redressée U.

Lorsque ce seuil $U_o$ est atteint par cette tension U, la force électrostatique H exercée sur l'électrode mobile 17 et résultant des champs antagonistes dûs respectivement à cette tension U et aux charges de l'électret devient inférieure à la force magnétique G et cette électrode bascule, ce qui ouvre l'interrupteur 22.

En d'autres termes, le fonctionnement du disjoncteur ci-dessus est automatiquement déclenché dès création d'un courant de fuite dangereux dans le circuit à protéger.

Si le pont redresseur 20 est à double alternance et si la tension V est une tension alternative à fréquence 50 Hz, le temps de réponse du disjoncteur est inférieur au centième de seconde.

Au lieu d'être simple et de couper un seul des deux fils 4 et 5, l'interrupteur 22 pourrait être prévu double et couper simultanément ces deux fils.

L'électret 5 est avantageusement constitué par une feuille mince d'un polymère à base d'un polymère fluoré ou d'une polyoléfine substituée d'épaisseur comprise entre 1 micron et 1 cm.

Sa densité superficielle de charge peut être comprise entre $10^{-12}$ Cb/cm$^2$ et $10^{-4}$ Cb/cm$^2$.

Par effet "peu réversible" qualifiant le mode de travail de l'organe 21, on entend ici un effet de type "avalanche", c'est-à-dire qui s'amplifie après son amorçage en supprimant dès lors toute hésitation.

Cet organe 21 n'est donc pas constitué par un simple ressort mécanique de rappel.

Dans les modes de réalisation préférés, ledit organe 21 est constitué par un aimant permanent fixe propre à fermer son circuit magnétique à l'intérieur d'une armature 23 en matériau magnétique faisant partie de l'électrode mobile 17 ou rapportée sur cette dernière.

On sait en effet que l'attraction magnétique exercée par l'aimant 21 sur l'armature 23 est inversement proportionnelle au carré de la distance entre ces deux éléments : de ce fait, ladite attraction magnétique est relativement faible tant que l'électrode mobile 17 est appliquée contre l'électret 18, ce qui assure une bonne stabilité de l'ensemble à l'état de veille, notamment vis-à-vis des chocs.

Par contre, dès que l'électrode mobile 17 commence à s'écarter de l'électret 18, la sollicitation à l'écartement augmente rapidement, ce qui assure une commande franche du dispositif.

Enfin, la force d'attraction magnétique entre l'aimant et l'électrode mobile devient maximum en fin de course de cette dernière, ce qui assure un maintien ferme de celle-ci en sa position de fin de course ainsi que de l'interrupteur 22 en sa position ouverte.

On fait remarquer que cet effet de basculement brusque de l'électrode mobile 17 est favorisé par le fait que les attractions électrostatiques exercées entre cette électrode mobile et aussi bien l'électret 18 que l'électrode fixe 16 sont, elles aussi, inversement proportionnelles au carré de la distance entre ladite électrode mobile et les deux dits éléments fixes.

On pourrait obtenir d'autres manières l'effet "peu réversible" défini ci-dessus.

Par exemple, l'organe de sollicitation 21 pourrait être constitué par un mécanisme élastique à dépassement de point mort attelé sur l'électrode mobile 17.

En raison du caractère "peu réversible" de l'organe 21, il ne suffit pas que le courant de fuite ayant provoqué le basculement de l'électrode mobile 17, et donc la coupure de l'un au moins des deux fils 4 et 5, s'annule pour que le disjoncteur retourne automatiquement à son état de veille initial.

Il faut à cet effet le réarmer.

On a schématisé par le bouton-poussoir fléché 24 sur la figure 2 un tel système de réarmement, lequel peut être très simplement actionné par simple appui d'un doigt sur un bouton disposé en regard de l'électrode mobile ou par une commande électromagnétique.

Mais le réarmement en question pourrait être obtenu par d'autres moyens que mécaniques, par exemple en appliquant provisoirement aux bornes des électrodes 16 et 17 une tension continue d'amplitude suffisante et de sens opposé à la tension U ci-dessus.

Dans les cas où sont prévus l'aimant 21 et l'armature 23, ledit réarmement peut également être assuré en insérant une cale magnétique entre cet aimant et cette armature, de façon à fermer le circuit magnétique correspondant par court-circuit, ou, mieux encore, en appliquant sur l'ensemble du disjoncteur un champ magnétique extérieur de sens contraire à celui exercé sur l'armature 23 par l'aimant 21 et d'intensité suffisante.

Cette dernière variante est particulièrement avantageuse lorsque l'ensemble des composants du disjoncteur est enfermé dans un boîtier commun tel que le boîtier 1 ci-dessus.

Il est à noter qu'il peut être en outre opportun d'enfermer certains de ces composants, comprenant au moins les électrodes 16 et 17, l'électret 18 et l'interrupteur 22 à l'intérieur d'une enceinte hermétique, soit évacuée, soit

remplie d'un gaz neutre éventuellement sous pression.

Bien entendu, le disjoncteur ci-dessus pourrait être monté dans un boîtier autre que celui d'une prise de courant volante à broches mâles, par exemple dans une prise de courant fixe à fiches femelles équipant une salle d'eau ou une uisine, ou encore dans le boîtier même d'un appareil électrique portatif dont on désire rendre l'usage non dangereux.

Dans un mode de réalisation particulièrement avantageux, le disjoncteur est monté dans un carter indépendant formant raccord et comportant lui-même à cet effet deux broches mâles et deux fiches femelles, ce raccord étant susceptible d'être branché isolément dans une prise fixe et de recevoir à son tour une prise de courant portative associée à l'un des appareils électriques ci-dessus.

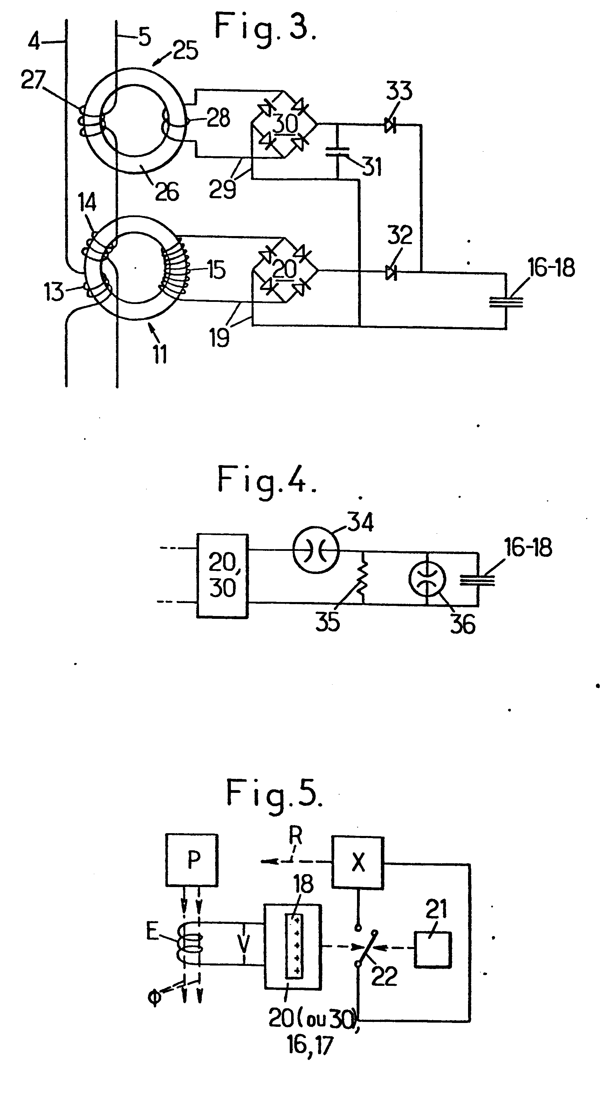

Dans le mode de réalisation qui a été schématisé sur la figure 3, le disjoncteur est encore sensible à l'apparition d'un courant de fuite sur l'un des deux fils 4 et 5, apparition décelée comme précédemment par la création d'une tension induite dans l'enroulement 15, puis par son redressement à l'aide du pont 20 et par son application aux bornes du condensateur 16, 17 à électret 18.

Mais il diffère du précédent en ce qu'il est sensible en outre à l'apparition d'une surintensité sur l'un des deux fils 4 et 5.

A cet effet, le disjoncteur considéré comprend un deuxième transformateur 25 composé de deux enroulements montés sur un même noyau magnétique fermé 26 tel qu'un anneau en µ-métal, savoir un premier enroulement 27 constitué par un tronçon du fil 5 (ou 4) et un second enroulement 28.

Ce dernier enroulement 28 est relié, comme l'enroulement 15 précédent, par un circuit 29 comprenant un pont redresseur 30, aux bornes 16 et 17 du condensateur.

Bien entendu, si les enroulements primaires des deux transformateurs 11 et 25 ont des nombres de spires égaux ou tout au moins du même ordre de grandeur, on donne au nombre des spires de l'enroulement secondaire 28 une valeur beaucoup plus petite qu'à celui de l'enroulement secondaire 15 de façon que les signaux de tension appliqués sur le condensateur et correspondant au déclenchement de celui-ci soient sensiblement identiques, quel que soit le défaut (courant de fuite ou surintensité) qui leur donne naissance : à titre d'exemple, on indique que la première voie doit assurer des déclenchements pour des courants de fuite de l'ordre de quelques milliampères seulement alors que les surintensités détectables par la seconde voie sont plutôt de l'ordre de quelques ampères.

On voit encore sur la figure 3 une capacité 31 branchée aux bornes de la sortie du pont redresseur 30 et deux redresseurs 32 et 33 branchés en série respectivement avec les deux ponts 20 et 30, éléments permettant d'introduire une temporisation dans les déclenchements du dispositif, de l'ordre notamment de quelques microsecondes, et d'éviter ainsi que ces déclenchements soient dûs à la simple apparition d'un parasite éphémère sur l'alimentation, en particulier en ce qui concerne la détection des surintensités.

Sur la figure 4, on a schématisé un perfectionnement consistant à prévoir, dans les montages décrits ci-dessus :
- d'une part, un organe de verrouillage 34 (éclateur, diode Zener...) interposé entre l'une des bornes du pont redresseur (20 ou 30) et l'une des électrodes 16 et 17 du condensateur, organe dont la résistance conserve une valeur élevée $Z$ tant que la tension U appliquée à son entrée demeure inférieure à $U_o$, et s'abaisse au contraire à une valeur relativement faible $\underline{z}$ dès dépassement de cette valeur $U_o$ par la tension U.
- et d'autre part, une résistance 35 de valeur comprise entre $\underline{z}$ et Z (par exemple de 100 mégohms si $\underline{z}$ et Z égalent respectivement 10 et 1000 mégohms), branchée aux bornes de ce condensateur 16, 17.

Ce perfectionnement permet d'éviter le déclenchement inopiné du dispositif pour des valeurs de la tension U élaborée par le pont considéré qui seraient seulement inférieures de peu au seuil de déclenchement préréglé $U_o$ ; de simples chocs pourraient en effet suffire alors à ce déclenchement, en l'absence des éléments 34 et 35 ci-dessus ; au contraire,

12

la présence de ces éléments rend impossible l'application aux bornes du condensateur de toute tension de valeur inférieure à $U_o$.

On prévoit en outre avantageusement, branché entre ces bornes 16 et 17, un autre organe 36 de protection contre les surtensions tel qu'un éclateur, une diode Zener, un tube à décharge gazeuse... : cet organe, étant rendu conducteur dès que la tension à ses bornes dépasse un seuil prédéterminé, évite que l'application d'une telle tension au condensateur à électret détériore celui-ci.

En suite de quoi, et quel que soit le mode de réalisation adopté, on obtient des disjoncteurs dont la constitution et le fonctionnement résultent clairement de ce qui précède.

Ces disjoncteurs présentent un certain nombre d'avantages par rapport à ceux antérieurement connus. En particulier, ils ne consomment aucun courant électrique, même en leur état de veille, ils sont particulièrement faciles à réarmer, après déclenchement, sans nécessiter le remplacement d'une pièce quelconque tel qu'un fusible, et leur fonctionnement est particulièrement sûr vu que les positions de leurs électrodes mobiles correspondant respectivement aux deux états de veille et de coupure sont remarquablement stables et non sensibles aux chocs : ce dernier avantage est particulièrement précieux lorsque les disjoncteurs considérés sont montés dans des boîtiers portatifs.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

- celles où l'électret 18 serait porté non pas par l'électrode fixe 16, mais par l'électrode mobile 17, ladite électrode mobile pouvant d'ailleurs être constituée par une simple métallisation dudit électret,

- celles où les basculements de l'électrode mobile seraient exploités de façon à déclencher, au lieu ou en plus de la simple ouverture d'un ou de plusieurs interrup-

teurs électriques, une autre commande, notamment la fermeture de tels interrupteurs à des fins d'alarme, ou encore la déviation ou l'obturation d'un faisceau lumineux, ou même l'obturation ou l'ouverture d'un orifice de passage d'un fluide,

- celles où des cales isolantes d'écartement seraient interposées entre l'électret et l'électrode en regard dont il n'est pas solidaire, de façon à réduire les risques de décharge accidentelle de l'électret et d'en augmenter donc la durée de vie,

- celles où l'alimentation électrique dont on désire surveiller les défauts serait assurée par un nombre de fils supérieur à deux, par exemple égal à trois, le transformateur destiné à détecter un éventuel déséquilibre d'une telle alimentation, alors triphasée, étant alors agencé de façon à engendrer en son secondaire à chaque instant une tension égale à la somme algébrique de ses trois phases.

D'une manière encore plus générale, on peut considérer que l'invention englobe tous les cas, schématisés sur la figure 5, où l'on désire détecter les dépassements d'un seuil donné par la vitesse de modification d'un phénomène P (figure 5) - et en particulier par l'apparition suffisamment rapide d'un tel phénomène -, la modification en question étant propre à se traduire elle-même par un flux magnétique variable $\phi$, engendrant instantanément dans un enroulement E (du type notamment des enroulements 15 et 28 ci-dessus) une force électromotrice induite V, cette force électromotrice étant ensuite convertie en une tension U par redressement (en 20 et/ou 30), puis appliquée à un condensateur 16, 17 à électret 18 de façon à faire basculer l'une des électrodes de ce condensateur, elle-même sollicitée par un aimant 21 ou analogue, les basculements en question étant ensuite exploités à toutes fins désirables, notamment par actionnement d'un interrupteur électrique 22.

Les moyens utilisés pour cette exploitation, qui sont schématisés sur la figure 5 par le bloc X, sont avantageusement agencés de façon à réagir sur le phénomène P, ainsi qu'il a été schématisé par la flèche R, de façon tout au moins à neutraliser les effets dangereux éventuels susceptibles d'être provoqués par ce phénomène lorsque sa manifestation dépasse une importance prédéterminée.

Comme exemples de tels phénomènes P autres que des apparitions de courants de fuite ou de surintensités susceptibles d'entraîner une disjonction, on peut citer comme concernés par l'invention tous les autres phénomènes capables de faire varier le champ ou flux magnétique traversant l'enroulement E ci-dessus et pour lesquels il est intéressant de détecter le dépassement d'un seuil donné par lesdites variations à l'aide d'un détecteur répondant aux conditions suivantes : ce détecteur, malgré son caractère "autonome", c'est-à-dire dont la veille et le fonctionnement ne font appel à aucune source de courant extérieure, et malgré ses très petites dimensions - se prêtant à la miniaturisation - transforme des variations, même relativement faibles et rapides, du flux détecté en basculements francs et irréversibles d'un élément mobile, basculements caractérisés à la fois par une grande amplitude, ce qui permet la commande directe de circuits de puissance, et par une force de maintien élevée en la position basculée, ce qui exige un réarmement spécial et confère un haut degré de sécurité aux commandes assurées.

De tels autres phénomènes sont par exemple les déplacements d'un objet lié soit à un aimant proche de l'enroulement E, soit à un écran magnétique disposé au moins en partie entre cet enroulement E et un aimant proche de celui-ci : un tel objet peut être par exemple un flotteur, ce qui permet la détection d'un niveau à travers une paroi étanche amagnétique.

15

Revendications de brevet.

1.      Dispositif pour détecter des variations de flux magnétique de façon telle que le dépassement d'un seuil donné
par l'amplitude d'une telle variation par unité de temps se
traduise par le déplacement d'un élément propre à déclencher
une action, comprenant un circuit électrique quasiment fermé,
tel qu'un enroulement, agencé et monté de façon telle que
les variations du flux magnétique à détecter engendrent par
induction aux bornes de cet enroulement une tension électrique V, caractérisé en ce qu'il comprend en outre deux électrodes (16, 17) formant condensateur, dont l'une (17) est
mobile par rapport à l'autre (16), un électret (18) interposé
entre ces deux électrodes et dont la charge produit un champ
exerçant sur ces électrodes une force électrostatique H tendant à les rapprocher mutuellement, des moyens (19, 20) pour
élaborer à partir de la tension V ci-dessus une tension redressée U et pour appliquer cette tension U entre les deux
électrodes dans un sens tel que le champ qui en résulte s'oppose à celui engendré par l'électret et tende donc à réduire
la force H, et des moyens (21, 23) sollicitant de manière
"peu réversible" l'électrode mobile dans le sens opposé à la
force H, la force de sollicitation (G) de ces moyens et la
charge de l'électret étant choisies de façon telle que les
dépassements par la tension U d'un seuil $U_o$ prédéterminé correspondant au niveau à détecter du phénomène générateur du
flux magnétique provoquent les basculements de l'électrode
mobile de sa position de veille à sa position active, le
déclenchement de l'action ci-dessus étant asservi auxdits
basculements.

2.      Dispositif détecteur selon la revendication 1,
caractérisé en ce que les moyens de sollicitation à effet
peu réversible sont de type magnétique et constitués de
préférence par un aimant permanent (21) fixe et par une
pièce en matière magnétique (23) liée à l'électrode mobile.

3.      Dispositif détecteur selon la revendication 1,
caractérisé en ce que les moyens de sollicitation à effet
peu réversible sont constitués par un mécanisme élastique à dépassement de point mort.

4.        Dispositif détecteur selon l'une quelconque des revendications précédentes, caractérisé en ce qu'un organe manuel de réarmement (24) est prévu pour replacer l'électrode mobile en sa position de repos initiale après ses basculements.

5.        Dispositif détecteur selon l'une quelconque des revendications précédentes, caractérisé en ce qu'il comprend, monté entre les moyens redresseurs (20, 30 et le condensateur (16, 17) un ensemble de verrouillage (34, 35) propre à couper automatiquement la liaison entre ces moyens et ce condensateur tant que la tension U demeure en deçà du seuil $U_o$ et à établir au contraire cette liaison au-delà de ce seuil.

6.        Dispositif détecteur selon l'une quelconque des revendications précédentes, caractérisé en ce qu'un organe (36) de protection contre les surtensions est branché aux bornes du condensateur (16, 17).

7.        Disjoncteur selon l'une quelconque des revendications précédentes, sensible aux déséquilibres d'une alimentation électrique effectuée à travers des premiers fils, caractérisé en ce qu'il comprend un transformateur (11) agencé de façon à engendrer automatiquement une tension sur un autre fil (15) lors de l'apparition d'un tel déséquilibre dans ladite alimentation, tension jouant le rôle de la tension V ci-dessus, et un interrupteur électrique (22) monté sur l'un au moins (5) desdits premiers fils et agencé de façon à être ouvert par les basculements susdits de l'électrode mobile (17).

8.  .        Disjoncteur selon la revendication 7, sensible indifféremment à un courant de fuite propre à déséquilibrer une alimentation électrique effectuée à travers au moins deux fils, ou à une surintensité apparaissant sur l'un de ces fils, caractérisé en ce qu'il comprend deux sous-ensembles amont à transformateur (11, 25) et redresseur (20, 30) sensibles chacun à l'un de ces défauts et choisis de façon à élaborer respectivement des signaux de commande de même ordre de grandeur, et un sous-ensemble aval commun compor-

17

tant le condensateur (16, 17) à électret (18), les moyens de rappel peu réversibles (21) et l'interrupteur (22).

9. Disjoncteur selon l'une quelconque des revendications 7 et 8, caractérisé en ce que l'ensemble du transformateur (11), des moyens redresseurs (20) de la tension V, des électrodes (16, 17), de l'électret (18), des moyens de sollicitation (21, 23) à effet peu réversible et de l'interrupteur (22) sont montés dans un même boîtier (1).

10. Disjoncteur selon la revendication 9, caractérisé en ce que le boîtier est celui d'une prise de courant à au moins deux fiches mâles ou femelles.

11. Disjoncteur selon la revendication 10, caractérisé en ce que le boîtier est un raccord pour prise de courant comprenant au moins deux fiches mâles et au moins deux fiches femelles.

# FIG.1.

# FIG.2.

# Fig. 3.

# Fig. 4.

# Fig. 5.

((•)) Office européen
des brevets

**RAPPORT DE RECHERCHE EUROPEENNE**

Numéro de la demande

EP 79 40 0523

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 2 294 535 (LEWINER)<br>* Page 3, ligne 39 à page 4, ligne 6; page 5, lignes 13-22; page 7, ligne 18 à page 8, ligne 6; page 9, lignes 1-14; page 17, lignes 19-25 *<br>-- | 1,7 |
| | FR - A - 1 542 614 (HUBBELL)<br>* Page 2, colonne de gauche, lignes 39-48 *<br>-- | 2 |
| | FR - A - 1 335 118 (MOSER)<br>* Page 2, colonne de droite, alinéas 1 et 3; point 1 du résumé *<br>-- | 3,4,<br>9-11 |
| | FR - A - 1 407 271 (LEAD)<br>* Page 2, colonne de gauche, alinéas 1 à 5 *<br>-- | 5,8 |
| | FR - A - 2 124 491 (ELECTRO-CONDUTTORE)<br>* Page 6, lignes 19-23 *<br>-- | 6 |
| | DE - A - 1 053 639 (STUKE)<br>* Colonne 3, ligne 52 à colonne 4, ligne 37 *<br>-- | 7 |
| P,E | FR - A - 2 389 896 (DREYFUS)<br>./. | 1,2 |

**CLASSEMENT DE LA DEMANDE (Int. Cl. ³)**

H 02 H 3/32
H 01 H 59/00
H 02 H 3/10

**DOMAINES TECHNIQUES RECHERCHES (Int. Cl. ³)**

H 02 H 3/32
3/34
H 01 H 59/00
G 01 R 5/28
H 02 H 3/10
1/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 26-10-1979 | SIMON |

OEB Form 1503.1 06.78

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | * Page 3, ligne 17 à page 4, ligne 5; page 5, lignes 1-11; page 9, lignes 24-40 | | |
| P,E | & BE - A - 866 731 | | |
| E | & DE - A - 2 819 816 | | |
| P,E | & NL - A - 78 04778 | | |
| | ---- | | **DOMAINES TECHNIQUES RECHERCHES (Int. Cl. ³)** |